# EUROPEAN PATENT SPECIFICATION

(11) **EP 2 514 145 B1**
(45) Date of publication and mention of the grant of the patent: **08.10.2014**
(21) Application number: 10785295.6
(22) Date of filing: 30.11.2010
(51) Int. Cl.: H04L 12/811, H04L 12/853

(54) **METHOD OF IMPROVING QUALITY OF SERVICE FOR VOICE CALLS HANDLED BY A NETWORK ELEMENT**
VERFAHREN ZUR VERBESSERUNG DER DIENSTGÜTE FÜR ÜBER EIN NETZWERKELEMENT GEMANAGTE SPRACHANRUFE
PROCÉDÉ PERMETTANT D'AMÉLIORER LA QUALITÉ DE SERVICE POUR DES APPELS VOCAUX TRAITÉS PAR UN ÉLÉMENT DE RÉSEAU

(30) Priority: 18.12.2009 US 654389
(43) Date of publication of application: 24.10.2012
(73) Proprietor: ALCATEL LUCENT, 92100 Boulogne-Billancourt (FR)
(72) Inventor: UZUNALIOGLU, Huseyin, Millington NJ 07946 (US); CALIN, Doru, Manalapan NJ 07726 (US)
(74) Representative: Sarup, David Alexander
(86) International application number: PCT/US2010/058267
(87) International publication number: WO 2011/075303

(56) References cited:
- WO-A1-2009/029009
- WO-A2-2009/097132
- US-A1- 2005 281 277

## Description

### BACKGROUND OF THE INVENTION

Femto base stations, for example, are customer premises equipment (CPE) devices that cover a small area such as a home or a small building. As they are deployed at wireless subscribers' homes, they utilize a subscriber's broadband connection, whether digital subscriber line (DSL) or Cable. As Femto carries wireless voice and data traffic, certain quality of service (QoS) should be guaranteed for good service quality. Applicable QoS solutions depend on the relationship between the wireless service provider and the wireline service provider. There are 3 potential relationship models:
1) Common Wireless and Wireline Operator: Since same operator owns the network path from the Femto base station (also called a Femto) to the Femto gateway, the operator can manage the wireline access network to guarantee QoS required for the Femto service.
2) Separate Wireless and Wireline Operators with a service level agreement (SLA): In this scenario, the wireline access provider is different from the wireless operator; however there is an SLA between them so that Femto traffic is given required QoS within the access network. The QoS mechanisms applicable to this scenario are similar to the common operator case, and can be implemented in a static or dynamic manner.
3) Wireless and Wireline Operators with no SLA Agreement: In this case, the wireline operator has no incentive to provide QoS to the Femto traffic, which is simply served as best effort. The Femto provider should make sure that the Femto solution still works, maybe with some acceptable quality degradation over the best-effort IP network.

WO 2009/097132 A2 discloses a method for voice traffic management in a network that transmits non-voice traffic as well as VoIP-data packages. The data rate at a LAN egress point is set to a default maximum bandwidth setting as long as no non-voice traffic is present. If voice traffic occurs, the data rate is reduced until a monitoring of the rate of non-voice traffic and voice quality statistics shows that these have changed. Then the bandwidth is increased as long as the voice quality is not degraded. If this bandwidth is found, it is set to a level somewhat lower.

### SUMMARY OF THE INVENTION

The present invention relates to methods of improving quality of service for voice calls at the network element handling voice and data traffic.

In one embodiment, the method includes throttling, at the network element, a data rate of data traffic sent by the network element based on a quality of service for at least one voice call handled by the network element.

For example, the network element may be Femto base station.

In one embodiment, the throttling includes decreasing the data rate of the data traffic if the quality of service for the voice call becomes unacceptable. The data rate may be decreased by a fixed decrement, a fixed percentage, etc. The decreasing may be repeated a number of times based on whether decreasing the data rate increases the quality of service for the voice call.

For example, the network element stops decreasing the data rate if the quality of service for the voice call does not improve for a period of time. In this case, the network element may institute an alternative procedure for improving the quality of service for the voice call.

In one embodiment, the method includes periodically probing whether the data rate can be increased without degrading the quality of service for the voice call.

### BRIEF DESCRIPTION OF THE DRAWINGS

Example embodiments of the present invention will become more fully understood from the detailed description provided below and the accompanying drawings, wherein like elements are represented by like reference numerals, which are given by way of illustration only and thus are not limiting of the present invention and wherein:
Fig. 1 illustrates a typical deployment scenario for a standalone Femto base station at a home or office served by a DSL connection.
Fig. 2 depicts an example QoS architecture of the home section of the architecture shown in Fig. 1.
Figs. 3A-3B illustrates an embodiment of a method for improving quality of service for voice calls.
Fig. 4 illustrates an embodiment of the probing to increase data rate function according to an embodiment.
Fig. 5 depicts the case where the reduction of the data traffic rate helps to improve the voice QoS.
Fig. 6 depicts the case where the reduction of the data traffic rate does not help to improve the voice QoS.

### DETAILED DESCRIPTION OF EXAMPLE EMBODIMENTS

Various example embodiments of the present invention will now be described more fully with reference to the accompanying drawings in which some example embodiments of the invention are shown. In the drawings, the thicknesses of layers and regions are exaggerated for clarity.

Detailed illustrative embodiments of the present invention are disclosed herein. However, specific structural and functional details disclosed herein are merely representative for purposes of describing example embodiments of the present invention. This invention, however, may be embodied in many alternate forms and should not be construed as limited to only the embodiments set forth herein.

Accordingly, while example embodiments of the invention are capable of various modifications and alternative forms, embodiments thereof are shown by way of example in the drawings and will herein be described in detail. It should be understood, however, that there is no intent to limit example embodiments of the invention to the particular forms disclosed, but on the contrary, example embodiments of the invention are to cover all modifications, equivalents, and alternatives falling within the scope of the invention. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

The terminology used herein is for the purpose of describing particular embodiments only and is not intended to be limiting of example embodiments of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

As used herein, the term "user equipment" may be considered synonymous to, and may hereafter be occasionally referred to, as a mobile, mobile unit, mobile station, mobile user, subscriber, user, remote station, access terminal, receiver, etc., and may describe a remote user of wireless resources in a wireless communication network. The term "base station" may be considered synonymous to and/or referred to as a base transceiver station (BTS), NodeB, extended Node B, femto cell, access point, etc. and may describe equipment that provides the radio baseband functions for data and/or voice connectivity between a network and one or more users.

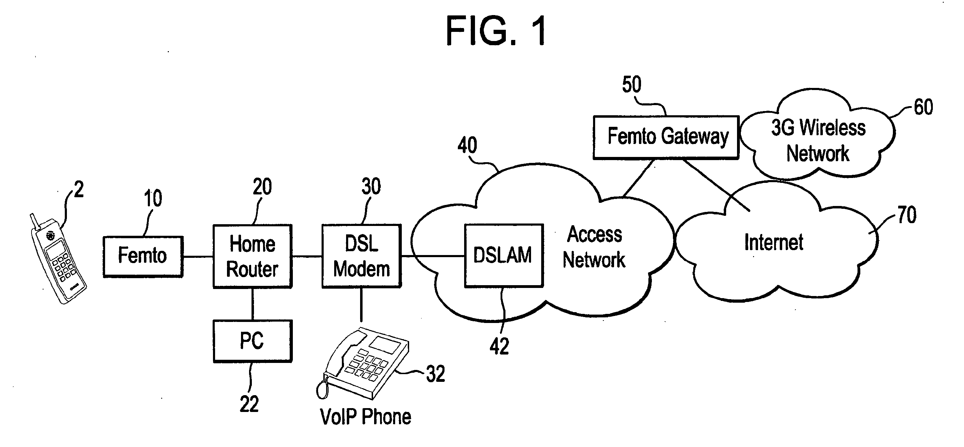

The subject application addresses the quality of service (QoS) problem in the third case discussed in the Background section and refers to the scenario as Femto over best effort access network. Fig. 1 illustrates a typical deployment scenario for a standalone Femto base station at a home or office served by a DSL connection. In this disclosure a Femto base station may also be referred to simply as a Femto. As shown in Fig. 1, a Femto 10 is connected to a home router 20 that is connected to a DSL modem 30. Both connections are assumed to be Ethernet. Personal computers (PCs) 22 at home are connected to the home router 20 via Ethernet or WiFi. For the purposes of illustration, in Fig. 1, it is assumed that the household subscribes to the Residential VoIP service offering of the DSL provider. Accordingly, the DSL modem 30 communicates with DSL access multiplexer (DSLAM) 42 in the access network 40. Note that the Residential VoIP traffic can be given QoS by the DSL provider. As the Femto provider is different than the DSL provider and it is assumed there is no SLA between them, Femto traffic is treated as best-effort along the path to the Femto gateway 50. As shown, the Femto gateway 50 provides access to both a 3G wireless network 60 and the internet 70. Note that Femto Internet traffic may follow Femto Gateway-3G Wireless Network-Internet path as well.

In the configuration shown in Fig. 1, the combination of mobile phones 2 and the Femto base station 10 can be thought as a PC connected to the home router 20 using an Ethernet cable. With this analogy, mobile voice can be thought of similar to a voice over Internet protocol (VoIP) application and all other mobile applications would be thought as similar to the applications running in the PC. As the access network 40 is best-effort, there is no guarantee that the voice application receives good QoS. However, in the absence of traffic overloads, all applications receive good performance in packet networks. Thus, a Femto solution may work fine most of the time. However, a well-designed system should provide good or acceptable service quality even during the congestion periods.

In a packet network, congestion occurs when the offered load to a shared resource/link surpasses the capacity of the shared resource. One way of reducing congestion is to reduce the traffic offered to the congested link. According to embodiments of the present invention, the Femto base station 10 reduces the traffic competing with the voice packets.

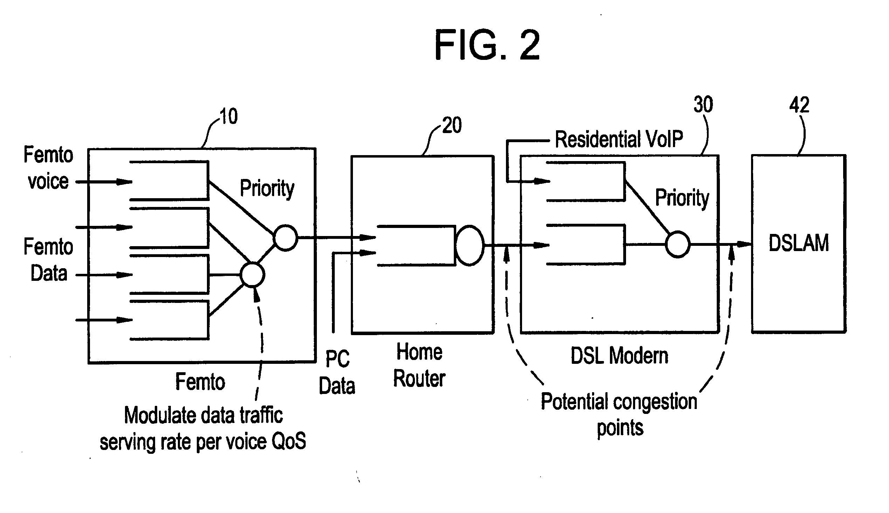

Fig. 2 depicts an example QoS architecture of the home section of the architecture shown in Fig. 1. Within the Femto base station 10, voice packets are given priority over data packets. However there is no such distinction between voice and data packets within the home router 20, the DSL Modem 30, the DSLAM 42, and the rest of the access network 40. Thus, when there are bottlenecks in the path towards the Femto Gateway 50, Femto data packets would cause extra delay for the voice packets at these bottlenecks since there is no distinction made between the voice and data packets within the best-effort network. In this disclosure, data and/or data packets refer to non-voice call data and packets. Embodiments of the present invention mitigate this issue by throttling down Femto data traffic when voice quality degradation is observed. The Femto base station 10 tracks the QoS level of the ongoing voice calls it is serving. When a QoS degradation is detected, the Femto base station 10 starts reducing the rate of its data traffic. While reducing the rate for the data traffic, two outcomes are possible with the voice traffic QoS:
1) QoS improves in relation to data traffic rate reduction. This is a clear sign that Femto data traffic is competing against the Femto data traffic at the congested link. Data rate reduction should continue until the voice QoS improves to acceptable levels or QoS improvement stops.
2) QoS does not improve in relation to data traffic rate reduction. This is a sign that Femto data traffic is not competing against the Femto data traffic at the congested link. There is no need to reduce the data traffic rate further as this is not improving the QoS of the voice connection.

Once the data sending rate is reduced to a stable level where either the voice QoS is acceptable or the voice QoS is not improving by further reduction in data traffic rate, embodiments may employ periodic probing to increase the data traffic rate. With time, other traffic streams would depart from the congested link leaving space for the Femto data traffic to grow. Thus, the Femto base station 10 tries to increase data traffic rate as long as the Femto voice QoS is not adversely affected.

In cases where the data traffic rate reduction does not improve the voice QoS to acceptable level, alternative congestion mitigation techniques such as handover to the macro cell may be performed.

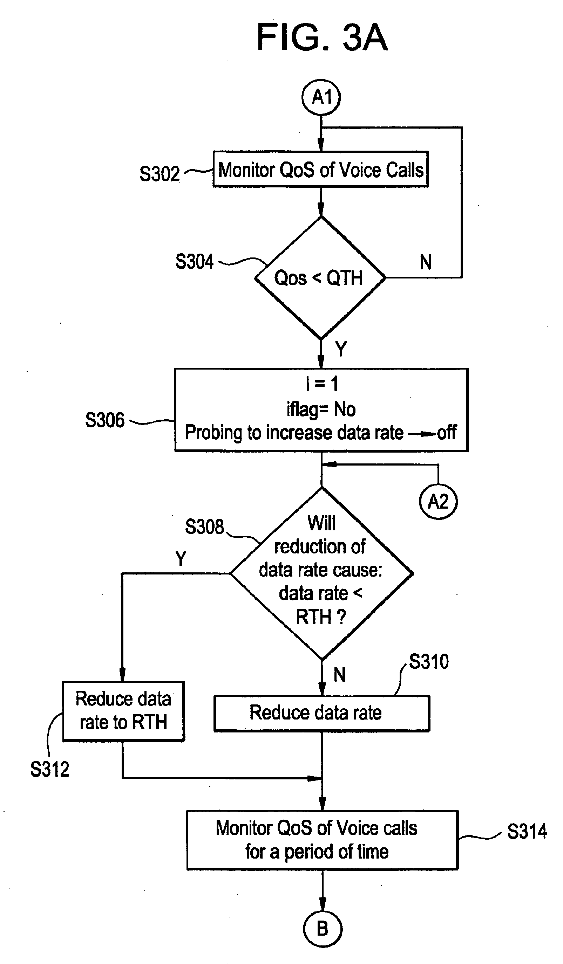

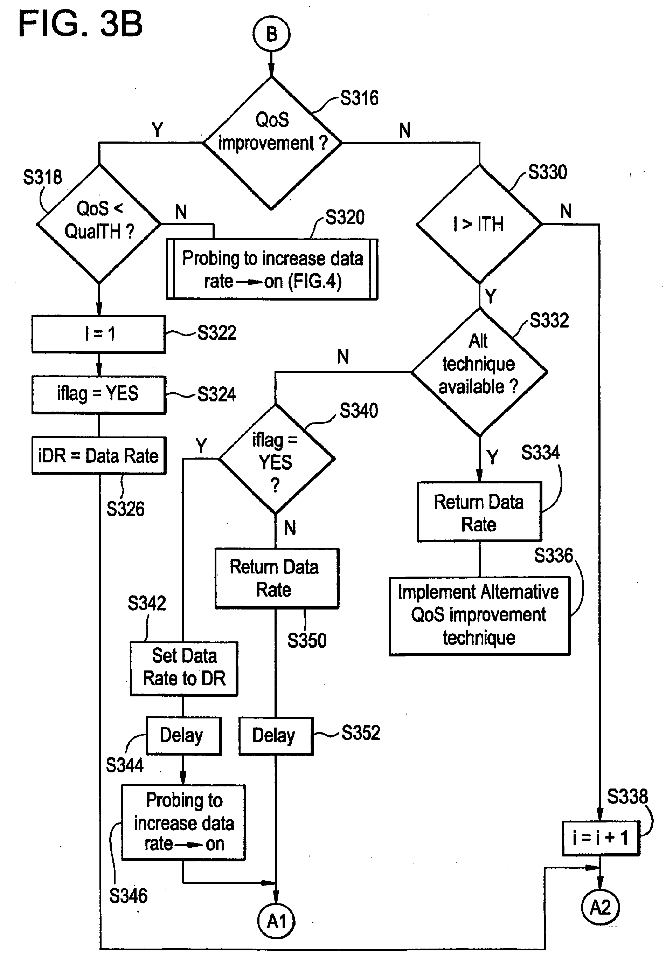

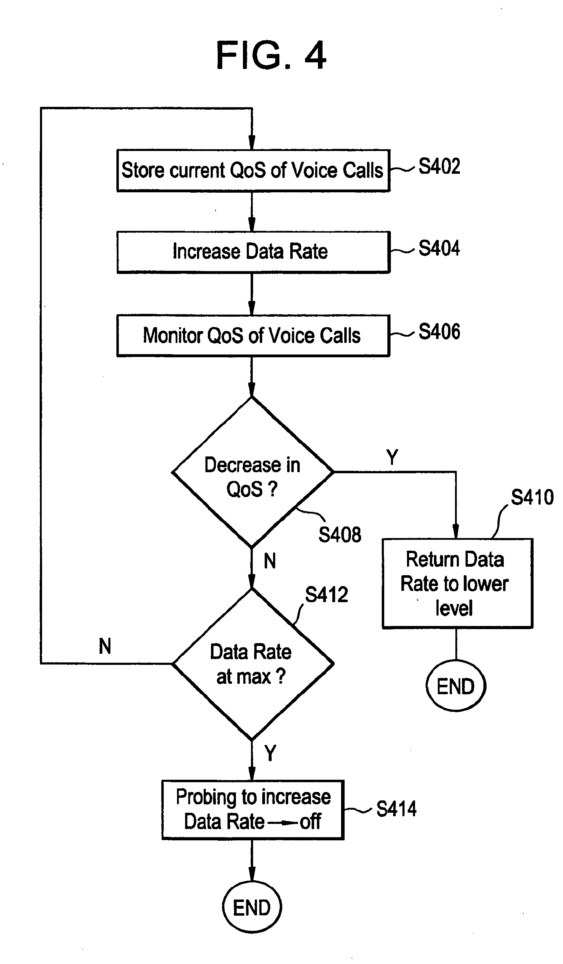

The method of improving quality of service for voice calls handled by the base station 10 will now be described in greater detail with respect to Figs. 3A, 3B and 4. Figs. 3A-3B illustrates an embodiment of improving quality of service for voice calls at a network element. As shown in Fig. 3A, in step S302 the base station 10 monitors the quality of service of the voice call or calls.

For example, the base station 10 may send probe packets, which the Femto gateway 50 recognizes and echoes back to the base station 10. The base station 10 tracks a quality of service parameter with respect to the probe packets. For example, the base station 10 may track packet loss, a rate of packet loss, packet delay, packet delay variation, etc. As is known, packets include a sequence number identifying the order of the packets in a sequence. By monitoring the sequence numbers, a receiver can determine when packets are missing.

As another example, the base station 10 may track quality of service for voice packets sent from the Femto gateway 50 to the base station 10, also referred to as the downlink. In complimentary fashion, the Femto gateway 50 may track quality of service for voice packets sent from the base station 10 to the Femto gateway 50, also referred to as the uplink. The Femto gateway 50 may report the uplink quality of service to the base station 10. The base station 10 may combine the uplink and downlink quality of service measurements to generate a combined QoS measurement. This combination may be straight addition, an average, a weighted average, etc.

The base station 10 may monitor QoS for calls individually and then generate a collective QoS for voice calls such as by averaging or weighted averaging. Alternatively, the voice calls may be treated collectively in generating the QoS (e.g., packet loss, packet loss rate, etc.)

In step S304, the base station 10 determines if the monitored QoS drops below a threshold QTH. The threshold QTH may be established such that a monitored QoS equal to or above the threshold QTH indicates acceptable levels of service for the voice calls, and a monitored QoS below the threshold QTH indicates unacceptable levels of service. As will be appreciated, the threshold QTH is a design parameter and will depend on the method of monitoring and forming the QoS measurement as well as the desired level of acceptable QoS, etc.

Assuming that the QoS is acceptable, processing returns to step S302. However, if the QoS is unacceptable, then in step S306, the base station 10 initializes an iteration counter I to one, initializes an improvement flag iflag to NO, and turns a probing to increase data rate function OFF. The probing to increase data rate function will be described in more detail with respect to Figs. 3B and 4.

Next, in step S308, the base station 10 determines if reducing the date rate of data traffic in accordance with a potentially subsequent step S310 will reduce the data rate of the data traffic below a data rate threshold RTH. If so, then in step S312, the base station 10 reduces the data rate of the data traffic sent by the base station 10 to the data rate threshold RTH. This ensures that the data rate of the data traffic sent by the base station 10 remains at some minimum level.

In step S308, if reducing the data rate of the data traffic in according with step S310 will not reduce the data rate below the data threshold RTH, then in step S310, the base station 10 throttles down the data rate of the data traffic sent by the base station 10. For example, the base station 10 may reduce the data rate by a fixed decrement. Alternatively, the base station 10 may reduce the data rate by a fixed percentage (e.g., 10%). Still further alternatives may be applied, such as an adaptive reduction, etc.

After the reduction in data rate of the data traffic, the base station 10 monitors the QoS of the voice calls for a period of time in step S314. The length of time is a design parameter that may be established empirically.

Referring to Fig. 3B, the base station 10 determines in step S316 whether the QoS of the voice calls has improved. For example, the base station 10 compares the QoS measured in step S302 to the QoS measured in step S314 to determine whether the QoS has increased. If so, then the voice QoS has improved, and in step S318, the base station 10 determines if the QoS is less than a quality threshold QualTH. The quality threshold QualTH may be the same as the threshold QTH from step S304. Alternatively, to establish a hysteresis effect and prevent ping-ponging between increases and decreases in the data rate, the quality threshold QualTH may be set greater that the threshold QTH from step S304.

If the QoS is not less than the quality threshold, then the voice calls have returned to an acceptable quality of service. Accordingly the base station 10 in step S320 will turn on a probing function that probes whether the data rate of the data traffic may be increased. This probing function may be performed periodically by the base station 10 until disabled. The periodicity of performing the probing function may be a design parameter set by empirical study. The probing function will be performed concurrently with the continued process of Figs. 3A-3B. Namely, after enabling the periodic performance of the probing function, the base station 10 returns to monitoring the QoS of the voice calls in step S302.

Fig. 4 illustrates an embodiment of the probing to increase data rate function. As shown, in step S402 the base station 10 stores the monitored voice QoS from step S314, also called the current QoS. The base station 10 in step S404 increases the data rate of the data traffic sent by the base station 10. The increase may be a fixed increment. Alternatively, the increase may be a fixed percentage (e.g., a 10% increase from the current data rate). Still further, other methods of increasing the data rate such as an adaptive increase, may be implemented. It will be understood that if the increase results in increasing the data rate beyond a maximum capability of the base station 10, then the data rate is increased to the maximum data rate.

After increasing the data rate, the QoS of the voice calls is monitored and the base station 10 determines in step S408 if the voice QoS has decreased from that stored in step S402. If so, this indicates a degradation in the quality of the voice calls, and in step S410, the base station 10 returns the data rate to the level prior to the increase made in step S404. However, if no degradation is determined in step S408, then in step S412, the base station 10 determines if the data rate has been increased to the maximum data rate of the base station 10. If so, then the probing function is turned off and the base station 10 will no longer periodically perform the probing function of Fig. 4. If the maximum data rate has not been reached, then processing returns to step S402.

As will be appreciated, periodically performing the process of Fig. 4 permits the base station 10 to periodically attempt increasing the data rate. As congestion decreases whether due to improved conditions in the access network 40, fewer voice or data handling service at the base station 10, (improvement can also happen at home router 20 and DSL modem 30) etc., conditions may permit higher data traffic rates without degrading the voice call performance. It will also be appreciated that if no voice call exists, the probing function may be disabled and the data rate of the data traffic may be set to the maximum data rate.

Returning to Fig. 3B and step S318, if the quality of service of the voice calls is less than the quality threshold QualTH, then in step S322 the base station 10 sets the iteration counter I to one, the base station 10 sets the improvement flag iflag to YES in step S324, and sets an improvement data rate iDR equal to the current data rate of the data traffic in step S326. Processing then returns to step S308 in Fig. 3A.

Returning to step S316, if the QoS of the voice calls did not improve as a result of decreasing the data rate of the data traffic, then in step S330, the base station 10 determines if the iteration counter I exceeds an iteration threshold ITH. If not, then the iteration counter I is incremented in step S338 and processing returns to step S308.

However, if the iteration counter I does exceed the iteration threshold ITH in step S330, this indicates a desired number of data rate reductions in the data traffic have taken place without affecting the QoS of the voice calls. As will be appreciated, as an alternative to setting the iteration counter I in step S322 to one, which may reset the iteration counter I, step S322 may simply be eliminated.

The base station 10 determines in step S332 if alternative QoS improvement techniques for the voice calls are available to the base station 10 if the iteration threshold ITH is exceeded. If so, then in step S334, the data rate is returned to the maximum, and in step S336 one of the available alternatives is implemented. For example, as discussed above, a Femto cell generally falls within a macro cell of a wireless communication system. Namely, the coverage area of the macro cell includes the coverage area of the Femto cell. Accordingly, in step S336, the Femto base station 10 may hand over one or more of the voice calls to the base station of the macro cell. To improve the application of this alternative technique, the base station 10 may also reduce transmit power to improve the hand over.

Returning to step S332, if the base station 10 does not have an alternative technique for improving the QoS of the voice calls, then in step S340 the base station 10 determines if the improvement flag iflag is set to YES. If so, this indicates that the QoS of the voice calls was improved by some reduction in the data rate of the data traffic. In this case, in step S342 the data rate of the data traffic is set to the data rate iDR of step S326, which is the last data rate that resulted in improvement of the voice call QoS. Then in step S344 further processing is delayed by a period of time. This period of time is a design parameter set by empirical study. For example the period of time may be of a sufficient length to permit changes (e.g., reduced congestion, terminated voice calls, etc.) in current conditions. After the delay, the base station 10 enables the periodic probing function to increase the data rate of the data traffic in step S346, and processing returns to step S302.

Returning to step S340, if the improvement flag iflag is not set to YES, then no improvement in the QoS has taken place as a result of reducing the data rate. Accordingly, in step S350, the data rate is returned to the maximum data rate. Then in step S352, further processing is delayed by a period of time. This period of time is a design parameter set by empirical study. For example the period of time may be of sufficient length to permit changes (e.g., reduced congestion, terminated voice calls, etc.) in current conditions. The period of time may be the same as in step S344, or may be different than the period of time in step S344. After the delay, processing returns to step S302.

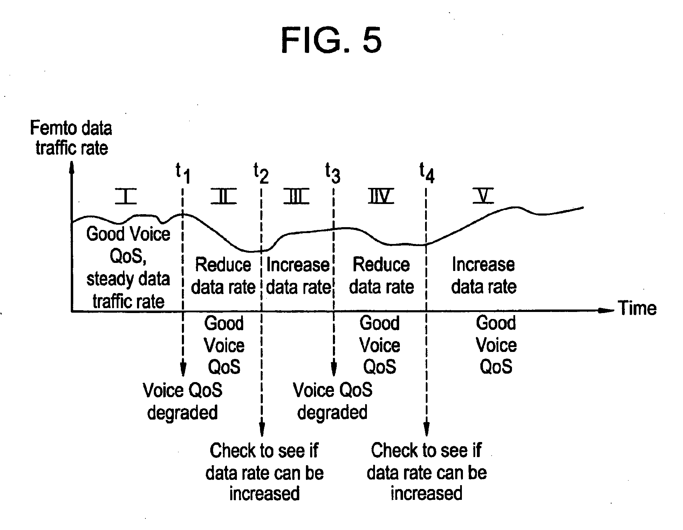

Fig. 5 depicts the case where the reduction of the data traffic rate helps to improve the voice QoS. In Region I, voice QoS is good and data traffic rate is steady. At time t₁, the Femto base station 10 detects degradation of the voice QoS. In Region II, sending rate of the data traffic is reduced and the Femto base station 10 detects that the voice QoS improves to acceptable levels. Starting at time t₂, the Femto base station 10 starts increasing the data sending rate to see if voice quality degrades. At time t₃, Femto base station 10 detects degradation of the voice QoS. Data sending rate is reduced in Region IV. Starting at time t₄, Femto base station 10 starts increasing the data sending rate again to see if voice quality degrades. This time no degradation is observed, and thus, data traffic is throttled up.

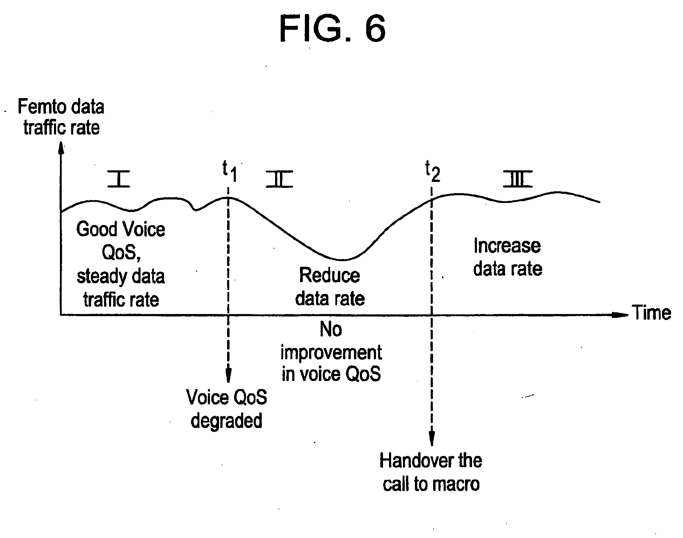

Fig. 6 depicts the case where the reduction of the data traffic rate does not help to improve the voice QoS. In Region I, voice QoS is good and data traffic rate is steady. At time t₁, Femto base station 10 detects degradation of the voice QoS. In Region II, sending rate of the data traffic is reduced, but no improvement of the voice QoS was seen by the Femto base station 10. As a result, a voice hand over call to the macro cell is attempted, and the data traffic rate is throttled up. Alternatively, if the Signal to Interference and Noise Ratio (SINR) for the voice call is relatively poor, it indicates some potential radio problems, and consequently other radio resource management techniques can be applied to enhance the quality of the voice call.

As will be appreciated, while described with respect to a Femto deployment in a home, the embodiments are also applicable to other deployments such as an office or building. Still further while describe with respect to Femto, it will be appreciated that the embodiments may be applicable to other architectures. Additionally, the principles of the above described embodiments are applicable to other real time traffic services which have strict QoS and delay requirements.

The embodiments improve the deployment of Femto base stations in location (e.g., homes, offices, etc.) with best effort access networks. This will increase the addressable market for Femto deployments.

The embodiments provide that a Femto base station can take action to alleviate QoS degradation when access network congestion leads to degraded voice quality. The embodiments attempt to solve the congestion problems without relying on the macro network. In most cases, the QoS can be improved without putting additional traffic to the macro cell.

The invention being thus described, it will be obvious that the same may be varied in many ways. Such variations are not to be regarded as a departure from the invention, and all such modifications are intended to be included within the scope of the invention.

## Claims

1. A method of improving quality of service for voice calls handled by a femto base station, comprising:
Throttling (S308, S310, S312, S334, S350, S320), at the femto base station (10), a data rate of data traffic sent by the femto base station based on a quality of service for at least one voice call handled by the femto base station;
decreasing (S310, S312) the data rate of the data traffic if the quality of service for the voice call becomes unacceptable, wherein the decreasing step stops decreasing the data rate if the quality of service for the voice call does not improve for a period of time.

2. The method of claim 1, wherein the decreasing step decreases the data rate by a fixed decrement.

3. The method of claim 1, wherein the decreasing step decreases the data rate by a percentage.

4. The method of claims 2 or 3, wherein the decreasing step repeats decreasing a number of times based on whether decreasing the data rate increases the quality of service for the voice call.

5. The method of claim 1, further comprising:
instituting (S336) an alternative procedure for improving the quality of service for the voice call if (1) the decreasing step stops decreasing the data rate because the quality of service for the voice call does not improve for a period of time and (2) the alternative procedure is available.

6. The method of claim 5, further comprising:
setting (S342) the data rate at a last known data rate that achieved improvement in the quality of service for the voice call.

7. The method of claim 5, further comprising:
periodically (S407-S414) probing whether the data rate can be increased without degrading the quality of service for the voice call.

8. The method of claim 7, further comprising:
maintaining that data rate at an increased rate if the probing step indicates the data rate can be increased without degrading the quality of service for the voice call.

## Patentansprüche

1. Verfahren zur Verbesserung der Dienstgüte für von einer Femto-Basisstation verarbeitete Sprachanrufe, umfassend:
Drosseln (S308, S310, S312, S334, S350, S320), an einer Femto-Basisstation (10), einer Datenrate eines von der Femto-Basisstation gesendeten Datenverkehrs auf der Basis einer Dienstgüte für mindestens einen von der Femto-Basisstation verarbeiteten Sprachanruf;
Verringern (S310, S312) der Datenrate des Datenverkehrs, wenn die Dienstgüte für den Sprachanruf inakzeptabel wird, wobei der Schritt des Verringerns aufhört, die Datenrate zu verringern, wenn sich die Dienstgüte für den Sprachanruf während einer Zeitspanne nicht verbessert.

2. Verfahren nach Anspruch 1, wobei der Schritt des Verringerns die Datenrate um ein festgelegtes Dekrement verringert.

3. Verfahren nach Anspruch 1, wobei der Schritt des Verringerns die Datenrate prozentual verringert.

4. Verfahren nach Anspruch 2 oder 3, wobei der Schritt des Verringerns das Verringern in Abhängigkeit davon, ob die Dienstgüte für den Sprachanruf durch das Verringern der Datenrate erhöht wird, mehrmals wiederholt wird.

5. Verfahren nach Anspruch 1, weiterhin umfassend:
Einleiten (S336) eines alternativen Verfahrens zur Verbesserung der Dienstgüte für den Sprachanruf, wenn (1) der Schritt des Verringerns aufgrund dessen, dass sich die Dienstgüte für den Sprachanruf während eines Zeitraums nicht verbessert, aufhört, die Datenrate zu verringern und (2) das alternative Verfahren verfügbar ist.

6. Verfahren nach Anspruch 5, weiterhin umfassend:
Einstellen (S342) der Datenrate auf eine zuletzt bekannte Datenrate, welche eine Verbesserung der Dienstgüte für den Sprachanruf erzielt hat.

7. Verfahren nach Anspruch 5, weiterhin umfassend:
Periodisches (S407-S414) Überprüfen, ob die Datenrate erhöht werden kann, ohne die Dienstgüte für den Sprachanruf zu verschlechtern.

8. Verfahren nach Anspruch 7, weiterhin umfassend:
Aufrechterhalten dieser Datenrate bei einer erhöhten Rate, wenn der Schritt des Überprüfens angibt, dass die Datenrate erhöht werden kann, ohne die Dienstgüte für den Sprachanruf zu verschlechtern.

## Revendications

1. Procédé permettant d'améliorer la qualité de service pour des appels vocaux traités par une station de base femto, comprenant les étapes suivantes :
réduire (S308, S310, S312, S334, S350, S320), au niveau de la station de base femto (10), un débit de données d'un trafic de données envoyé par la station de base femto en fonction d'une qualité de service pour au moins un appel vocal traité par la station de base femto ;
diminuer (S310, S312) le débit de données du trafic de données si la qualité de service pour l'appel vocal devient inacceptable, dans lequel l'étape de diminution arrête de diminuer le débit de données si la qualité de service pour l'appel vocal ne s'améliore pas pendant une certaine période.

2. Procédé selon la revendication 1, dans lequel l'étape de diminution diminue le débit de données selon un décrément fixe.

3. Procédé selon la revendication 1, dans lequel l'étape de diminution diminue le débit de données selon un pourcentage.

4. Procédé selon la revendication 2 ou 3, dans lequel l'étape de diminution répète la diminution plusieurs fois selon que la diminution du débit de données augmente ou non la qualité de service pour l'appel vocal.

5. Procédé selon la revendication 1, comprenant en outre l'étape suivante :
instituer (S336) une procédure alternative pour améliorer la qualité de service pour l'appel vocal si (1) l'étape de diminution arrête de diminuer le débit de données par ce que la qualité de service pour l'appel vocal ne s'améliore pas pendant une certaine période et si (2) la procédure alternative est disponible.

6. Procédé selon la revendication 5, comprenant en outre l'étape suivante :
régler (S342) le débit de données sur un dernier débit de données connu qui a permis d'améliorer la qualité de service pour l'appel vocal.

7. Procédé selon la revendication 5, comprenant en outre l'étape suivante :
tester périodiquement (S407 à S414) si le débit de données peut être augmenté sans altérer la qualité de service pour l'appel vocal.

8. Procédé selon la revendication 7, comprenant en outre l'étape suivante :
maintenir ce débit de données à un débit augmenté si l'étape de test indique que le débit de données peut être augmenté sans altérer la qualité de service pour l'appel vocal.
